## Europäisches Patentamt
## European Patent Office
## Office européen des brevets

(19)

(11) Veröffentlichungsnummer: **0 1 1 4 959**
**B1**

(12) # EUROPÄISCHE PATENTSCHRIFT

(45) Veröffentlichungstag der Patentschrift:
26.07.89

(51) Int. Cl.⁴: **G 12 B 9/02, G 01 D 7/02**

(21) Anmeldenummer: **83111588.6**

(22) Anmeldetag: **19.11.83**

(54) Elektrischer Schalter für die Rauminstallation mit elektronischen Geräteeinrichtungen.

(30) Priorität: **08.12.82 DE 8234397 U**

(43) Veröffentlichungstag der Anmeldung:
**08.08.84 Patentblatt 84/32**

(45) Bekanntmachung des Hinweises auf die Patenterteilung:
**26.07.89 Patentblatt 89/30**

(84) Benannte Vertragsstaaten:
**CH FR GB IT LI SE**

(56) Entgegenhaltungen:
**DE-A- 2 913 894**
**US-A- 3 641 299**
**US-A- 4 282 591**

(73) Patentinhaber: **GRÄSSLIN KG, Bundesstrasse 36,
D-7742 St. Georgen (DE)**

(72) Erfinder: **Kammerer, Gerd, Schiltachweg 15, D-7742 St.
Georgen (DE)**

(74) Vertreter: **Thoma, Friedrich (DE), Buchenstrasse 20,
D-7612 Haslach i.K. (DE)**

ACTORUM AG

## Beschreibung

Die Erfindung betrifft einen elektrischen Schalter für die Rauminstallation mit elektronischen Geräteeinrichtungen, wie einer Uhr, einem Thermometer oder einer Signallampe, die im Gehäuse des Schalters angeordnet sind und bei dem die optoelektronischen Anzeigevorrichtungen der Geräteeinrichtungen auf der Vorderseite des Gehäuses des Schalters zusammen mit der Betätigungswippe oder -Taste eines Schalters angeordnet sind, wobei die Geräteeinrichtungen zum schalterabhängigen und/oder schalterunabhängigen Anzeigen, Steuern und/oder Überwachen vorgesehen sind.

Bei einer Vielzahl von Anwendungen derartiger elektrischer Schalter ist es zweckmäßig, die räumliche vorteilhafte, hervorstechende und gut sichtbare bzw. gut bedienbare Lage in der solche Schalter in Räumlichkeiten oder sonstigen Vorrichtungen angeordnet sind, durch die Anordnung von, insbesondere elektronischen, Anzeige-, Steuer- und/oder Überwachungsgeräten oder sonstigen vergleichbaren elektronischen Einrichtungen zu solchen Schaltern zu nutzen. Dabei soll sichergestellt sein, daß die dort vorgesehenen, elektronischen Geräteeinrichtungen sowohl abhängig, als auch unabhängig von den Schaltbefehlen derartiger Schalter arbeiten.

Aus der US-A-4 282 591 ist ein elektrischer Schalter für die Rauminstallation bekannt, in dessen Gehäuse zusätzlich elektronische Geräteeinrichtungen in Form einer elektronischen Uhr, eines elektronischen Thermometers und einer Signallampe eingebaut sind, deren optoelektronische Anzeigevorrichtungen auf der Vorderseite des Gehäuses des Schalters, zusammen mit dessen Betätigungswippe angeordnet sind. Dort arbeiten diese Geräteeinrichtungen völlig unabhängig vom elektrischen Steuerkreis des Schalters. Diese Geräteeinrichtungen werden jedoch aus diesem Steuerkreis mit elektrischer Energie versorgt.

Die Versorgung dieser Geräteeinrichtungen mit elektrischer Energie aus dem Steuerkreis des Schalters ist jedoch vielfach mit dem erheblichen Nachteil behaftet, daß dieser Stromkreis eine, zur Betriebsspannung derartiger Geräteeinrichtungen, viel zu hohe Spannung aufweist, sodaß ein oder mehrere sogenannte Netzgeräte für diese Geräteeinrichtungen vorgesehen werden müssen, die räumlich relativ groß sind und unter Umständen nicht mit in das Schaltergehäuse eingebaut werden können.

Der Erfindung liegt die Aufgabe zugrunde diesen Nachteil zu vermeiden und einen Schalter der eingangs genannten Art zu schaffen, bei dem die elektronischen Geräteeinrichtungen in ihrer elektrischen Energieversorgung unabhängig vom Schalter arbeiten.

Diese Aufgabe wird mit den Merkmalen im kennzeichnenden Teil des Patentanspruchs gelöst und in den Unteransprüchen sind weitere vorteilhafte Einzelheiten beansprucht.

Vorteilhaft bei diesem Schalter ist nicht nur, daß die elektronischen Geräteeinrichtungen, wie eine Uhr, eine Schaltuhr, ein Betriebszeitenzähler, ein Thermometer, ein Thermostat, ein Hygrometer, ein Hygrostat, eine Raumüberwachungseinrichtung, insbesondere in Form eines Ultraschall- oder Infrarotgebers, einer Sprechanlage, eine Melde- oder Quittiereinrichtung für den Schalterbetrieb, auf der Vorderseite des Gehäuses des Schalters räumlich neben dem Betätiger oder in bzw. auf dem Betätiger angeordnet sein können, insbesondere wenn der Betätiger als Schalterwippe ausgebildet ist, sondern auch, daß diese Geräteeinrichtungen netzunabhängig, völlig autonom mit einer eigenen Stromversorgung, z. B. mit einer auswechselbaren Batterie oder mit einem Akku versehen sind. Vorteilhaft ist ferner die einfache Installation oder Nachrüstung an die Stelle einfacher Installationsschalter.

Wie die Neuerung im einzelnen gedacht ist, wird anhand von Ausführungsbeispielen im folgenden näher erläutert. Es zeigen

Fig. 1 eine Vorderansicht auf einen elektrischen Schalter für die Rauminstallation mit einer, neben dem Betätigungselement des Schalters benachbart angeordneten, elektronischen Geräteeinrichtung in der Form einer digital anzeigenden Schaltuhr,

Fig. 2 eine Vorderansicht auf einen Schalter mit einem, um das Betätigungselement herum angeordneten, Zifferblatt einer elektronischen Uhr oder Schaltuhr,

Fig. 3 eine Vorderansicht auf einen Schalter mit einem Betätigungselement mit glasklarer Vorderseite und einem, dort integrierten, elektronischen Gerät in Form eines Betriebszeitzählers, eines Arbeits- oder Leistungszählers, oder einer Uhr,

Fig. 4 eine Vorderansicht auf einen Schalter mit einem einseitig angeordneten Betätigungselement und einem, vorderseitig dazu benachbart angeordneten, Raumüberwachungs- oder Sprechgerät,

Fig. 5 eine Vorderansicht auf einen Schalter mit einem zylindrischen Betätigungselement und einem, um das Betätigungselement herum angeordneten, Zifferblatt eines oder mehrerer elektronischer Geräteeinrichtungen in Form eines Thermometers und eines Hygrometers und

Fig. 6 einen Querschnitt durch einen Schalter und einer, im Betätigungselement, in Form einer Wippe, angeordneten elektronischen Geräteeinrichtung.

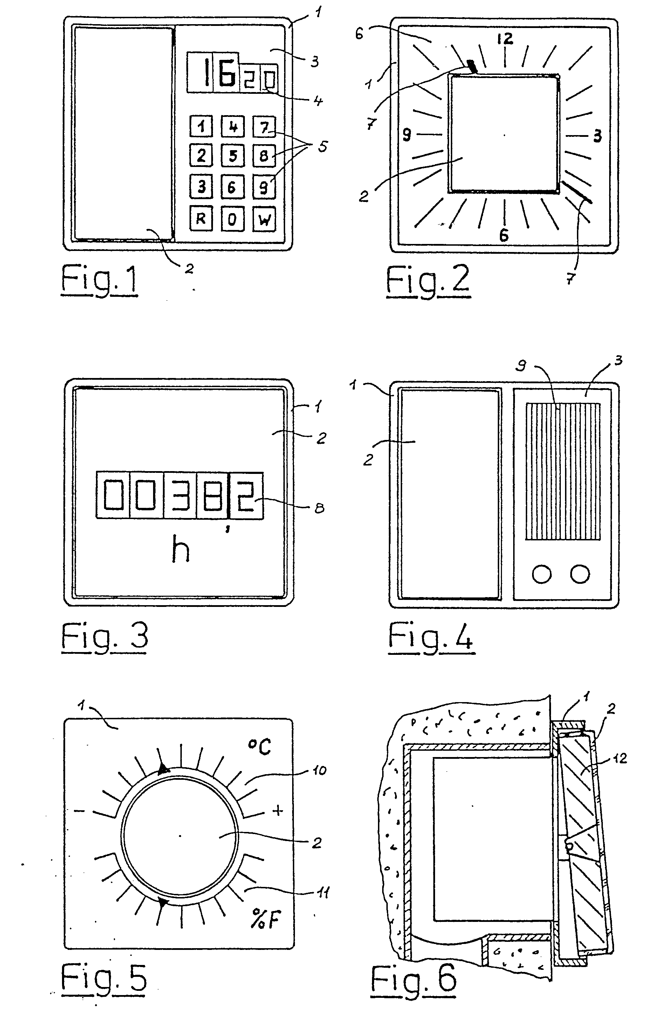

Der, in der Fig. 1 dargestellte, elektrische Schalter besteht im wesentlichen aus dem vorderseitigen Schalterrahmen 1 mit einem dort eingelassenen Betätigungsfeld 2, insbesondere in der Form einer Schalterwippe. Anstelle einer Schalterwippe kann auch eine Drucktaste vorgesehen sein. Das Betätigungselement 2 ist dort, bezogen auf die Flächengröße des Schalterrahmens 1, nur hälftig ausgebildet. Die andere Hälfte 3 des Schalterrahmens 1, der in seiner Größe insbesondere 72 × 72 mm den DIN-Normen für derartige Installationsschalter entsprechen kann, wird von einer elektronischen Schaltuhr eingenommen. Das Bezugszeichen 4 bezeichnet dort das optoelektronische Anzeigedisplay und 5 eine Eingabetastatur für die Uhrzeiten, Schaltzeiten, Schaltkanäle usw. Eine derartige elektronische Geräteeinrichtung kann dort unabhängig vom Schalter arbeiten und erforderlichenfalls auch mit einer eigenen Stromversorgung, z.B. einer auswechselbaren Batterie oder einem Akku versehen sein. Die Signale der Schaltuhr können dort sowohl über das Leitungsnetz des Schalters, als auch über getrennte Leitungen geführt werden, die im Rohrsystem des Schalters verlagt werden können.

Die vorteilhafte und zweckmäßige Anordnung und Ausführung dieser Gerätekombination ist offensichtlich. Es ist auch sichtbar, daß die eigentliche Schalterfunktion durch die Anordnung der elektronischen Geräteeinrichtung nicht beeinträchtigt wird, da die vorliegende Größe der Schaltwippe oder Taste den Normen entspricht. Die dortige Schaltuhrhälfte kann zweckmäßigerweise durch ein Abdeckglas abgedeckt sein.

Die Fig. 2 zeigt eine andere Ausführung eines elektrischen Schalters, der mit einer elektronischen Geräteeinrichtung kombiniert ist. Dort bezeichnet das Bezugszeichen 2 das, im Zentrum des vorderseitigen Schalterrahmens liegende, Betätigungselement in der Form und Größe einer, den Normen entsprechenden, Schalterwippe oder Taste. Um das Betätigungselement 2 herum verläuft ringförmig eine Skala 6 einer Uhr, insbesondere einer Schaltuhr, mit den Zeigern 7. Die Skala 6 dieser Uhr ist zweckmäßigerweise durch ein Abdeckglas abgedeckt. Die Einstellelemente können verdeckt seitlich oder rückseitig angeordnet sein. Im letzteren Falle ist es erforderlich, zur Programmierung bzw. Einstellung der Uhr das Betätigungselement 2 abzunehmen.

Auch bei dieser Ausführung wird die eigentliche Schalterfunktion durch die Anordnung dieser zeithaltenden elektronischen Geräteeinrichtung nicht beeinträchtigt.

In der Fig. 3 ist ein elektrischer Schalter sichtbar mit einem dort integrierten Betriebszeitenzähler. Das Bezugszeichen 1 bezeichnet den Schalterrahmen. Das Betätigungselement 2 in Form einer Schalterwippe ist glasklar ausgebildet und gibt den ganzen Blick frei auf das Zifferblatt des digital anzeigenden Betriebszeitenzählers mit einem Zählwerk 8. Es ist jedoch auch vorgesehen, daß die vorderseitige Fläche des Betätigungselementes 2 mit nur einem Ausschnitt für das Zählwerk 8 versehen ist und die übrige Fläche des Betätigungselementes 2 frei gestaltbar ist.

Es kann dort natürlich auch eine andere vergleichbare elektronische Geräteeinrichtung als Modul in das Betätigungselement 2 eingebaut sein. Im vorliegenden Falle kann eine derartige Geräteeinrichtung die Betriebszeiten eines Verbrauchers aufzeichnen, insbesondere der von dem vorhandenen Schalter angesteuert wird. An die Stelle eines Betriebszeitenzählers kann auch ein elektronischer Arbeits- und/oder Leistungszähler treten, der dort zur elektrischen Energieverbrauchsmessung herangezogen wird. Erforderlichenfalls können mehrere Zählwerke 8 vorderseitig ablesbar auf dem Betätigungselement 2 angeordnet sein.

In der Fig. 4 ist ein Schalterrahmen 1 sichtbar, mit einer dort vorderseitig angeordneten, zweiteiligen Geräteeinrichtung. Das Bezugszeichen 9 weist auf einen Sensor für eine Ultraschall- oder Infrarot-Raumüberwachung. Es ist auch daran gedacht, daß anstelle eines solchen Sensors auf der Flächenhälfte 3 ein Lautsprecher und/oder ein Mikrofon eingebaut ist, für eine akustische Raumüberwachung oder eine Wechselsprechanlage. Die Signale solcher elektronischen Geräteeinrichtungen können über das vorhandene Leitungsnetz, insbesondere im sogenannten Zeit-, Frequenz- oder Impulsmultiplexverfahren übertragen werden. Es ist jedoch auch möglich, separate Leitungsinstallationen über das vorhandene Rohrnetz zur Übertragung derartiger Signale vorzunehmen. Die dortigen räumlichen Schalterverhältnisse sind für derartige Geräteeinrichtungen ausreichend und vorteilhaft, ohne daß sie die Schalterbedienung beeinträchtigen.

In der Fig. 5 ist eine Schalterausführung gezeigt, mit einem Schalterrahmen 1 und einem, im Zentrum angeordneten, kreisrunden Betätigungselement 2, das als Drucktaste und/oder als Drehknopf für einen Schalter und/oder einen Dimmer ausgebildet ist. Um das Betätigungselement 2 herum sind dort insbesondere zwei elektronische Geräteeinrichtungen, ein Thermometer und/oder ein Thermostat mit einem Zifferblatt 10 und ein Hygrometer und/oder Hygrostat mit einem Zifferblatt 11, angeordnet. Auch diese Geräteeinrichtungen können jeweils als autonome Module eingebaut sein und vom Schalter unabhängig arbeiten.

Für besondere Zwecke ist es vorgesehen, daß um das Betätigungselement 2 herum stufenförmig weitere ringförmige Einstellknöpfe angeordnet sein können, zur Einstellung oder Programmierung der dortigen elektronischen Geräteeinrichtungen.

Die Fig. 6 zeigt im Querschnitt einen elektrischen Schalter mit einem Schalterrahmen 1 und einem Betätigungselement 2 in Form einer Schalterwippe, in der ein Modul 12 einer elektronischen Geräteeinrichtung eingebaut ist. Diese Geräteeinrichtung kann energetisch durch eine Batterie oder durch ein Thermoelement oder ein Solarelement gespeist werden.

Ein solcher Modul ist durch das Abnehmen der Wippe zugänglich und kann erforderlichenfalls auch von der Seite oder der Rückseite her eingestellt und programmiert werden. Die jeweilige Einstellung oder Programmierung kann jedoch auch von der Vorderseite her unmittelbar oder mittelbar mittels eines Werkzeuges erfolgen.

In einer Weiterbildung des Schalters ist es auch vorgesehen, daß eine elektronische Geräteeinrichtung, insbesondere eine Schaltuhr, unmittelbar mechanisch den Schalter, in dessen Betätigungselement 2 sie eingebaut ist, betätigt, indem ein mechanisches Schaltglied, das von der Geräteeinrichtung gesteuert ist, zwischen dem Betätigungselement 2 und einem stationären Schalterpunkt wirkt und das Betätigungselement 2 in seiner Schaltlage umschaltet.

## Patentansprüche

1. Elektrischer Schalter für die Rauminstallation mit elektronischen Geräteeinrichtungen, wie einer Uhr, einem Thermometer oder einer Signallampe, die im Gehäuse des Schalters angeordnet sind und bei dem die optoelektronischen Anzeigevorrichtungen der Geräteeinrichtungen auf der Vorderseite des Gehäuses des Schalters zusammen mit der Betätigungswippe oder -taste eines Schalters angeordnet sind, wobei die Geräteeinrichtungen zum schalterabhängigen und/oder schalterunabhängigen Anzeigen, Steuern und/oder Überwachen vorgesehen sind, dadurch gekennzeichnet, daß die elektronischen Geräteeinrichtungen mit einer netzunabhängigen Stromversorgung versehen sind.

2. Einrichtung nach Anspruch 1, dadurch gekennzeichnet, daß als Stromversorgung der Geräteeinrichtungen eine auswechselbare Batterie, oder ein Akku, oder Thermoelemente, oder Solarelemente vorgesehen ist.

3. Einrichtung nach Anspruch 1 und 2, dadurch gekennzeichnet, daß das Betätigungselement (2) des Schalters, bezogen auf die Flächengröße des Schalterrahmens (1), nur hälftig ausgebildet ist, und daß die andere Hälfte (3) von einer Geräteeinrichtung eingenommen wird.

4. Einrichtung nach Anspruch 1 und 2, dadurch gekennzeichnet, daß die Geräteeinrichtung in der Form eines Moduls (12) in das Betätigungselement (2) eingebaut ist.

5. Einrichtung nach einem der Ansprüche 4, dadurch gekennzeichnet, daß eine Geräteeinrichtung, insbesondere eine Schaltuhr, mittels eines mechanischen Schaltgliedes, das von der Geräteeinrichtung gesteuert ist und zwischen dem Betätigungselement (2) und einem stationären Schalterpunkt wirkt, das Betätigungselement (2) in seiner Schaltlage umschaltet.

## Claims

1. An electric switch for room installations having electronic instruments, such as a clock, a thermometer or a signalling lamp, which are arranged in the housing of the switch and wherein the opto-electronic display devices of the instruments are arranged on the front of the switch housing together with the actuating rocker or key of a switch, the instruments serving for display, control and/or monitoring purposes in dependence upon and/or independently of the switch, characterised in that the electronic instruments are provided with a current supply which is independent of the mains supply.

2. A device as claimed in Claim 1, characterised in that an exchangeable battery, or an accumulator, or thermal elements, or solar elements are provided as current supply for the instruments.

3. A device as claimed in Claim 1 and 2, characterised in that the actuating element (2) of the switch occupies only half the surface area of the switch frame (1) and that the other half (3) is occupied by an instrument.

4. A device as claimed in Claim 1 and 2, characterised in that the instrument is installed in the actuating element (2) in the form of a module (12).

5. A device as claimed in one of the Claims 4 (sic), characterised in that an instrument, in particular a time switch, switches over the actuating element (2) as regards its switching position by means of a mechanical switching element which is controlled by the instrument and which operates between the actuating element (2) and a stationary switch point.

## Revendications

1. Conjoncteur-disjoncteur pour installation intérieure comprenant des instruments électroniques tels qu'une horloge, un thermomètre ou une lampe-témoin disposés dans le boîtier dudit conjoncteur-disjoncteur et sur lequel les équipements d'affichage opto-électroniques afférant aux instruments sont situés sur le côté frontal du boîtier du conjoncteur conjointement à la touche ou au levier de manœuvre de celui-ci, sachant que l'affichage, le contrôle et/ou la surveillance des instruments s'effectuent sous la dépendance et/ou indépendamment du disjoncteur lui-même, caractérisé par le fait que les instruments électroniques sont munis d'une alimentation en énergie indépendante du secteur.

2. Dispositif selon la revendication 1, caractérisé par le fait que pour l'alimentation en énergie des instruments est prévue une pile interchangeable, ou un accumulateur, ou des éléments de batterie thermique ou des éléments de batterie solaire.

3. Dispositif selon les revendications 1 et 2, caractérisé par le fait que l'élément de commande (2) du conjoncteur-disjoncteur est réalisé de manière à n'occuper que la moitié de la surface de châssis de l'appareil (1) et par le fait que l'autre moitié (3) est occupée par des instruments.

4. Dispositif selon les revendications 1 et 2, caractérisé par le fait que les instruments sont incorporés dans l'élément de commande (2) sous la forme d'un module (12).

5. Dispositif selon la revendication 4, caractérisé par le fait qu'un instrument, en particulier une horloge de programmation, effectue la commutation de l'élément de commande (2) vers sa position active, par l'intermédiaire d'un élément mécanique qui est piloté par l'instrument et donc l'action s'exerce entre l'élément de commande (2) et un point de commutation fixe.

Fig.1

Fig.2

Fig. 3

Fig.4

Fig.5

Fig.6